# EUROPÄISCHE PATENTSCHRIFT

(11) **EP 1 488 910 B1**
(45) Veröffentlichungstag und Bekanntmachung des Hinweises auf die Patenterteilung: **24.01.2007**
(21) Anmeldenummer: 03024284.6
(22) Anmeldetag: 23.10.2003
(51) Int. Cl.: B29C 47/90, B29C 47/88

(54) **Vorrichtung zur Herstellung einer Folie aus thermoplastischem Kunststoff**
Apparatus for manufacturing a thermoplastic film
Appareil pour fabriquer un film thermoplastique

(30) Priorität: 17.06.2003 DE 20309429 U; 05.09.2003 DE 10341508
(43) Veröffentlichungstag der Anmeldung: 22.12.2004
(73) Patentinhaber: Reifenhäuser GmbH & Co. Maschinenfabrik, 53839 Troisdorf (DE)
(72) Erfinder: Wedell, Eike, 53721 Siegburg (DE); Meyer, Helmut, 53842 Troisdorf (DE)
(74) Vertreter: Müller-Gerbes, Margot

(56) Entgegenhaltungen:
- WO-A-03/033241
- US-A- 3 008 185
- US-A- 3 321 563
- US-A- 3 950 466
- US-A- 4 017 575
- US-A- 5 128 076

## Beschreibung

Die Erfindung betrifft eine Vorrichtung zur Herstellung einer Folie aus thermoplastischem Kunststoff, die mindestens einen Extruder mit einem Blaskopf für den Austritt einer Folienblase aus dem Kunststoff, eine außenseitig auf die Folienblase einwirkende Kalibriereinrichtung sowie eine der Kalibriereinrichtung nachgeordnete Flachlegeeinrichtung für die Folienblase umfaßt, wobei die Kalibriereinrichtung und/oder die Flachlegeeinrichtung Folienführungselemente aufweisen, die mit einem Luftstrom beaufschlagbar sind und im Bereich der der Folienblase zugewandten Oberfläche der Folienführungselemente Luftaustrittsöffnungen für den Austritt des zugeführten Luftstromes vorgesehen sind, wobei die der Folienblase zugewandte Oberfläche der Folienführungselemente von einer luftdurchlässigen mikroporösen Schicht mit einer mittleren Porengröße von 5 bis 100 µm ausgebildet ist.

Vorrichtungen und Verfahren zur Herstellung von auch als Blasfolie bezeichneten Folien aus thermoplastischem Kunststoff sind vielfältig bekannt.

Charakteristisch hierbei ist es, daß der Kunststoff in thermoplastischem, d.h. aufgeschmolzenem Zustand aus der üblicherweise ringförmigen Öffnung des Blaskopfes austritt und sogleich zu einer Folienblase aufgeblasen wird, welche sich nachfolgend unter Abkühlung unterhalb der Erstarrungstemperatur verfestigt. Die Folienblase wird zudem durch eine Kalibriereinrichtung geführt und in ihrem Durchmesser kalibriert und hieran anschließend von einer Flachlegeeinrichtung zu einer Doppelfolienbahn flachgelegt und nachfolgend aufgewickelt.

Die Kalibriereinrichtung ist hierbei üblicherweise in Gestalt eines so genannten Kalibrierkorbes ausgeführt, der die Folienblase außenseitig nach Art eines Zylinders umgibt und eine Vielzahl von Kalibrierarmen umfaßt, die außenseitig mit dem Umfang der Folienblase in Kontakt stehen, um diese in ihrem Durchmesser festzulegen und zu kalibrieren. Die Kalibrierarme können beispielsweise eine Vielzahl von drehbaren Kunststoffrollen aufweisen, die auf der Oberfläche der Folienblase abrollen und diese gleichzeitig kalibrieren. Auch sind Ausführungsformen mit rotierenden Bürsten oder dergleichen bekannt geworden. Die Kalibrierarme eines solchen Kalibrierkorbes sind üblicherweise verstellbar gehaltert, so daß verschiedene Durchmesser der Folienblase eingestellt und kalibriert werden können.

Diese bekannten Vorrichtungen zeichnen sich dadurch aus, daß die Folienblase während ihres Durchlaufs durch die Kalibriereinrichtung mit den Kalibriermitteln, etwa den Kalibrierarmen und den an diesen befestigten Kunststoffrollen in Kontakt steht, da eine unmittelbare Berührung derselben stattfindet. Diese Berührung der im Bereich der Kalibriereinrichtung noch nicht vollständig abgekühlten und erstarrten Folie durch die Kalibriereinrichtung ist jedoch beispielsweise bei der Herstellung von hochtransparenten oder klebrigen Folien von Nachteil, da sich entsprechende Laufmarkierungen auf der Folie infolge der Kontaktierung ausbilden können, die nachfolgend das optische Erscheinungsbild der hergestellten Folie negativ beeinträchtigen. Im Falle von klebrigen Folien kann es außerdem zu einer Blockierung der Kalibriereinrichtung kommen, welche nachfolgend eine Beschädigung der Folienblase und einen damit einhergehenden unfreiwilligen Produktionsstop nach sich zieht.

Die vorgenannten Ausführungen gelten in gleicher Weise auch für die der Kalibriereinrichtung nachgeordnete Flachlegeeinrichtung, in welcher die bereits in ihrem Durchmesser kalibrierte Folienblase zu einer Folienbahn flachgelegt wird.

Eine möglichst berührungslose Kalibrierung und/oder Flachlegung der Folienblase kann von daher in bestimmten Anwendungsfällen von erheblichem Vorteil sein.

In der EP 0 273 739 A1 ist hierzu bereits vorgeschlagen worden, die Folienblase zwischen starken an der Innen- und Außenseite der Folienblase angreifenden Luftströmen berührungslos zu führen, um eine Kontaktreibung mit den dadurch hervorgerufenen Oberflächenbeeinträchtigungen der Folienblase zu vermeiden. Der hierfür notwendige Anlagenaufwand mit leistungsstarken Gebläsen, Luftleitungen sowie entsprechender Steuerungstechnik ist jedoch sehr hoch und darüber hinaus entsteht das Problem, daß bei zu starken Luftströmungen unerwünschte Temperaturbeeinflussungen der Folienblase auftreten können, die die Qualität der erhaltenen Folie negativ beeinflussen.

Aus der EP 1 144 292 B1 ist überdies eine Vorrichtung zum berührungslosen Führen oder Behandeln einer laufenden Materialbahn, etwa einer Kunststoffolie bekannt geworden, bei der aus einer Kammer ein gasförmiges Fluid zur Führung der Bahn austritt, wobei die gasdurchlässige Wand aus einem metallhaltigen Werkstoff mit offenen Poren gefertigt ist. Die bekannte Vorrichtung wird jedoch zur Führung einer bereits hohe Stabilität aufweisenden Bahn in einer Beschichtungsvorrichtung eingesetzt.

Die US 5 128 076 A beschreibt eine ohne Flachlegeeinrichtung arbeitende Vorrichtung zur Herstellung von Folien, bei der die Folienblase eine Kalibriereinrichtung in Form eines zylindrischen Rohrabschnittes durchläuft, auf dessen Innenwandung eine poröse Schicht aufgebracht ist, durch welche ein Luftstrom in Richtung der durchtretenden Folienblase austritt, um eine berührungslose Kalibrierung zu ermöglichen. Aufgrund der Ausgestaltung als zylindrischer Rohrabschnitt ist diese bekannte Kalibiereinrichtung sehr unflexibel und kann nur für einen bestimmten Durchmesser der Folienblase eingesetzt werden.

Auch aus der US 3 950 466 A ist eine solche ring- oder zylinderförmige Kalibriereinrichtung bekannt, durch deren Innendurchmesser die zu kalibrierende Folienblase hindurchtritt und mittels eines aus porösen Innenoberflächen der Kalibriereinrichtung austretenden Luftstromes berührungslos kalibriert wird. Auch bei dieser bekannten Kalibiereinrichtung ist nur eine Eignung für einen bestimmten, dem Innendurchmesser der Kalibiereinrichtung angenäherten Durchmesser der Folienblase gegeben, was die Flexibilität unerwünscht einschränkt.

Aufgabe der Erfindung ist es, eine Vorrichtung zur Herstellung einer Folie aus thermoplastischem Kunststoff vorzuschlagen, bei welchem unter Umgehung der Nachteile des Standes der Technik eine berührungslose Kalibrierung und Flachlegung der insbesondere während der Kalibrierung noch nicht vollständig erstarrten und verfestigten Folienbahn erfolgen kann.

Zur Lösung dieser Aufgabe wird eine Vorrichtung gemäß den Merkmalen des Patentanspruches 1 vorgeschlagen.

Diese Vorrichtung zur Herstellung einer Folie aus thermoplastischem Kunststoff weist zur gewünschten Erzielung einer gleichmäßigen berührungslosen Kalibrierung und/oder Flachlegung der Folienblase eine Vielzahl von Tragarmen auf, die an ihrem freien, dem Außenumfang der Folienblase benachbarten Ende jeweils ein Folienführungselement tragen und jedes Folienführungselement mit einer Lufteintrittsöffnung ausgebildet ist.

Der solchermaßen ausgebildeten erfindungsgemäßen Vorrichtung liegt die Erkenntnis zugrunde, daß bei den bisher eingesetzten Folienführungselementen für die Kalibriereinrichtung und/oder die Flachlegeeinrichtung der Luftstrom aus den in definierten Abständen voneinander angeordneten Luftaustrittsöffnungen die austretende Luft infolge der für die Ausbildung des Luftpolsters erforderlichen hohen Luftgeschwindigkeit und hohen Massendurchsätze stets in Form turbulenter Luftströme austritt, welche ein inhomogenes Luftpolster entstehen lassen, so daß eine gleichmäßige Kalibrierung und Flachlegung der Folienblase nicht bewirkt werden kann und darüber hinaus auch Berührungen zwischen der Kalibriereinrichtung und/oder Flachlegeeinrichtung und der Folienblase auf Dauer nicht ausgeschlossen werden können.

Wird jedoch erfindungsgemäß ein laminares Luftpolster zwischen den Folienführungselementen der Kalibriereinrichtung und/oder Flachlegeeinrichtung und der Folienblase erzeugt, so erfolgt eine außerordentlich gleichmäßige Abstützung der Folienblase, die eine hohe Produktqualität unter zuverlässiger Vermeidung jedweder Berührung zwischen den Folienführungselementen und der Folienblase gewährleistet. Auf diese Weise kann mit dem erfindungsgemäßen Verfahren insbesondere eine Schlauchfolienbahn hoher Adhäsionswirkung auf Basis von z.B. EVA-Verbunden, PIB-Verbunden, Verbunden mit lonomeren in PE-LLD-Folien und ähnliches hergestellt werden.

Erfindungsgemäß ist insbesondere vorgesehen, daß die der Folienblase zugewandte Oberfläche der Folienführungselemente von einer luftdurchlässigen mikroporösen Schicht gebildet ist und der den Folienführungselementen zugeführte Luftstrom durch diese mikroporöse Schicht hindurch geführt wird, wobei die mikroporöse Schicht den Luftstrom in eine Vielzahl laminarer Teilluftströme aufteilt und die laminaren Teilluftströme jeweils durch einzelne Poren der mikroporösen Schicht in Richtung der Folienblase austreten und das laminare Luftpolster ausbilden.

Zur Erzeugung dieser laminaren Teilluftströme weist die luftdurchlässige mikroporöse Schicht vorteilhaft eine mittlere Porengröße von 5 bis 100 µm auf, wobei zur Erzielung einer ausreichenden Abstützwirkung der noch instabilen und infolge des Aufblasens zur Folienblase noch expansionswilligen Folienblase eine Porengröße zwischen 30 und 100 µm als bevorzugt angesehen wird.

Bei Ausbildung der erfindungsgemäßen Vorrichtung stellt sich überdies der Vorteil eines außerordentlich geringen Luftverbrauchs und niedrigem Betriebsgeräusch ein. So können die Folienführungselemente bei Beaufschlagung mit einem Luftstrom von 0,5 bis 4 bar lediglich mit einem Luftdurchsatz in Richtung auf die Folienblase von entsprechend 0,2 I/min dm² bei 0,5 bar bis 1,6 l/min dm² bei 4 bar betrieben werden, wobei auch bei diesem geringen Luftdurchsatz infolge der Ausbildung eines laminaren Luftpolsters eine berührungslose Führung gewährleistet ist.

Es hat sich im Rahmen der Erfindung gezeigt, daß eine solche der Folienblase zugewandte und dem Luftaustritt dienende luftdurchlässige mikroporöse Schicht den den Folienführungselementen zugeführten Luftstrom derart fein verteilt durch die Vielzahl kleinster und eng aneinander anliegender Mikroporen an der Oberfläche des Folienführungselementes austreten läßt, daß sich ein außerordentlich gleichmäßiges und konstantes Luftpolster ausbildet, so daß die Folienblase zuverlässig berührungslos kalibriert und/oder flachgelegt werden kann, selbst wenn diese eine hohe Klebneigung und hohe Adhäsionskräfte entwickelt.

Da im Gegensatz zur Führung einer bereits verfestigten Kunststoffolie die zu kalibrierende und/oder flachzulegende Folienblase in der erfindungsgemäßen Vorrichtung noch instabil und infolge der Aufweitung mit hoher Expansionsneigung versehen ist, ist zur zuverlässigen berührungslosen Kalibrierung und/oder Flachlegung derselben eine nicht unerhebliche Krafteinwirkung in radialer Richtung auf die Folienblase von der Kalibriereinrichtung und/oder Flachlegeeinrichtung auf die Außenoberfläche der Folienblase aufzubringen. Diese Krafteinwirkung kann jedoch nur erfolgen, wenn das zur berührungslosen Führung, Kalibrierung und Flachlegung benutzte Luftpolster eine gewisse Mindestintensität aufweist, die sich insbesondere bei Ausbildung der luftdurchlässigen mikroporösen Schicht mit einer mittleren Porengröße von 30 bis 100 µm einstellt.

Die zur Ausbildung der der Folienblase zugewandten Oberfläche des Folienführungselementes dienende mikroporöse luftdurchlässige Schicht weist vorteilhaft eine Dicke von 0,5 bis 2,0 mm auf, da bei diesen Schichtdicken die gewünschte Feinverteilung des Luftstromes bei gleichzeitiger hoher Luftdurchlässigkeit der mikroporösen Schicht gewährleistet ist.

Die Herstellung von mikroporösen Schichten mit einer erfindungsgemäß geforderten mittleren Porengröße von etwa 5 bis 100 µm, vorzugsweise etwa 30 bis 100 µm, kann auf unterschiedliche Weise bewirkt werden. Beispielsweise kann die mikroporöse Schicht auf Basis eines Pulvergemisches mit mehreren Komponenten unterschiedlicher Schmelztemperaturen hergestellt werden.

Insbesondere kann die luftdurchlässige mikroporöse Schicht auf Basis von Metall- und Keramikkomponenten hergestellt werden.

Eine bevorzugte Ausführungsform der im Rahmen der erfindungsgemäßen Vorrichtung eingesetzten Folienführungselemente sieht vor, daß diese ein Gehäuse aufweisen, welches eine der Folienblase abgewandte Rückwand und eine der Folienblase zugewandte und Luftaustrittsöffnungen aufweisende Vorderwand sowie die Rückwand und die Vorderwand unter Ausbildung einer abgeschlossenen Luftkammer verbindende Umfangswandung aufweist. Die Rückwand und die Umfangswandung sind in diesem Falle luftdicht ausgebildet, während auf die die Luftaustrittsöffnungen aufweisende Vorderwand die luftdurchlässige mikroporöse Schicht auf der der Folienblase zugewandten Seite aufgebracht ist, durch die letztlich die durch die Luftaustrittsöffnungen in der Vorderwand herangeführte Luft in Richtung auf die Folienblase aus dem Folienführungselement austritt. Zur Zuführung des Luftstromes ist im Bereich der Rückwand und/oder der Umfangswandung eine Lufteintrittsöffnung in die Luftkammer des Gehäuses vorgesehen.

In besonders vorteilhafter Ausführungsform der Erfindung ist die Luftkammer innerhalb des Gehäuses mittels Zwischenstegen in miteinander kommunizierende Teilkammern unterteilt und dient der Verteilung des zugeführten Luftstromes.

Die Zwischenstege sind ebenso wie die Umfangswandung mit der Rückwand verbunden, wobei bevorzugt eine Ausbildung der Rückwand mit auf der der Vorderwand zugewandten Oberfläche integral ausgeformter Umfangswandung und Zwischenstegen vorgesehen ist. Eine solche integrale Ausbildung der Umfangswandung und der Zwischenstege kann beispielsweise durch bereichsweises Ausfräsen oder dergleichen im Bereich der späteren Teilkammern erfolgen.

Sodann wird die Vorderwand auf die Umfangswandung und die Zwischenstege aufgesetzt und entlang der Umfangswandung luftdicht mit dieser verschweißt, z.B. mittels Laserverschweißung. Auch die Zwischenstege können durch einzelne Punktschweißungen mit der Vorderwand verbunden werden, um dieser eine größere Stabilität bei der späteren Beaufschlagung mit einem Druckluftstrom zu verleihen.

Schließlich erhöhen die Zwischenstege auch noch die Steifigkeit der Rückwand, so daß im Ergebnis ein außerordentlich kompaktes und formstabiles Gehäuse erhalten wird. Es hat sich im Rahmen der Erfindung gezeigt, daß bei Herstellung des Gehäuses aus einem metallischen Werkstoff ein 2-teiliges Gehäuse bestehend aus einer 2mm starken Rückwand, bei der durch 1 mm tiefe Ausfräsungen Umfangswandungen und Zwischenstege einer dementsprechenden Höhe von 1 mm erhalten werden und einer 2mm starken Vorderwand mit Luftaustrittsöffnungen eine überraschend gute und gleichmäßige Luftverteilung und Ausbildung des gewünschten Luftpolsters bietet.

Idealerweise wird somit ein gleichmäßiges homogenes Luftpolster zwischen der Folienblase und der dieser zugewandten Oberfläche des Folienführungselementes erzeugt, dessen Größe sich proportional zum Innendruck in der Luftkammer des Gehäuses verhält. Insbesondere durch Unterteilung der Luftkammer mittels Zwischenstegen in miteinander kommunizierende Teilkammern wird darüber hinaus sichergestellt, daß es über die gesamte der Folienblase zugewandte Oberfläche des Folienführungselementes betrachtet keine partiellen Luftpolsterdruckunterschiede gibt, so daß eine außerordentlich gleichmäßige berührungslose Führung und Kalibrierung bzw. Flachlegung der Folienblase erreicht wird.

Die Erfindung wird nachfolgend anhand von Ausführungsbeispielen in der Zeichnung näher erläutert. Es zeigen:
- Figur 1: in schematisierter Darstellung eine Seitenansicht einer Vorrichtung zur Herstellung einer Folie im Bereich des Blaskopfes mit nachgeordneter Kalibriereinrichtung
- Figur 2: in Fortsetzung der Darstellung gemäß Figur 1 die Vorrichtung im Bereich der Flachlegeeinrichtung
- Figuren 3a - 3d: verschiedene Ansichten eines innerhalb der Flachlegeeinrichtung gemäß Figur 1 eingesetzten Folienführungselementes
- Figur 4a: die Aufsicht auf eine Rückwand des Gehäuses eines Folienführungselementes
- Figur 4b: den Schnitt durch die Rückwand gemäß Pfeil V-V in Figur 4a
- Figur 4c: die Einzelheit X der Darstellung gemäß Figur 4b in vergrößerter Darstellung
- Figur 5a: die Aufsicht auf ein Folienführungselement
- Figur 5b: den Schnitt durch das Folienführungselement gemäß Figur 5a entlang der Linie W-W
- Figur 6: die Aufsicht auf die Kalibriereinrichtung 2 gemäß der Darstellung in Figur 1
- Figur 7: eine mikroskopische Aufnahme der der Folienblase zugewandten Oberfläche des Folienführungselementes
- Figur 8: eine Rasterelektronenmikroskopaufnahme aus einem Ausschnitt der Darstellung gemäß Figur 7

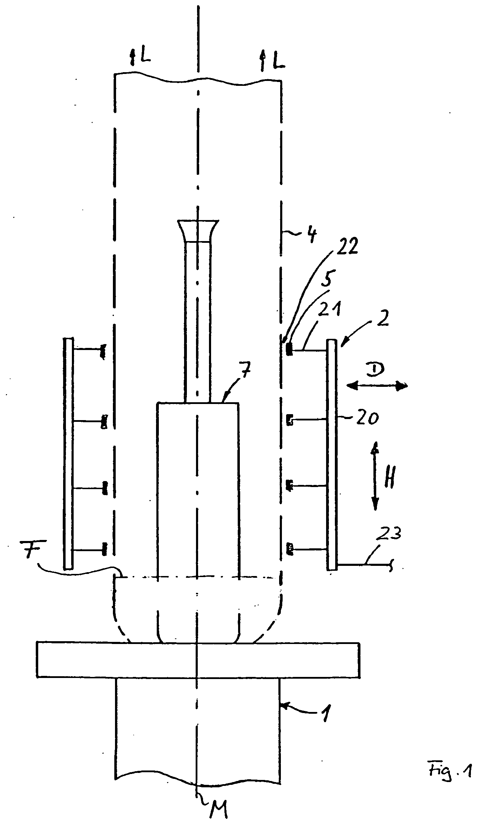

Die in der Figur 1 dargestellte Vorrichtung zur Herstellung einer Folie aus thermoplastischem Kunststoff umfaßt einen nicht in näheren Einzelheiten dargestellten Blaskopf 1, der über einen hier nicht sichtbaren Extruder mit aufgeschmolzenem thermoplastischen Kunststoff in an sich bekannter Weise beaufschlagt wird. Aus dem Blaskopf 1 tritt über eine oberseitige ringförmige Austrittsöffnung der Kunststoff in thermoplastischem Zustand aus und wird sogleich zu einer Folienblase 4 aufgeblasen und in Pfeilrichtung L vertikal nach oben abgeführt. Diese Folienblase 4 weist daher einen kreisförmigen Querschnitt mit einer Mittelachse M auf.

Unmittelbar nach dem Austritt aus dem Blaskopf 1 ist der die Folienblase 4 bildende Kunststoff infolge seiner hohen Temperatur noch in thermoplastischem Zustand, kühlt jedoch rasch unterhalb seiner Erstarrungstemperatur ab, wodurch die Folienblase 4 allmählich in einen stabilen Zustand überführt wird. Der Übergang zwischen thermoplastischem und erstarrtem Zustand der Folienblase 4 ist durch eine so genannte Frostlinie gekennzeichnet, die in der Figur 1 mit Bezugszeichen F angedeutet ist.

Man erkennt ferner in der Figur 1 den im Inneren der Folienblase 4 in an sich bekannter Weise angeordneten Innenluftaustauscher 7, der der Stützung der Folienblase 4 auf der Innenseite derselben dient.

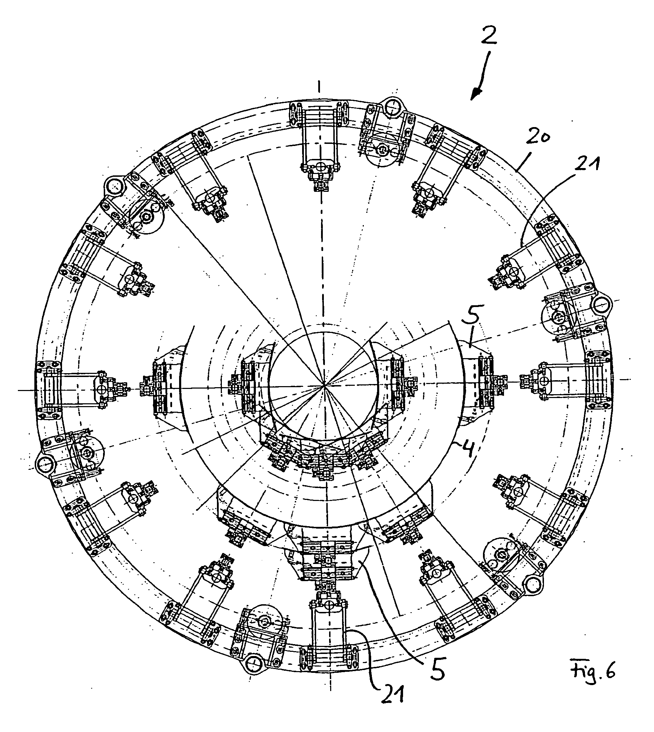

Bereits kurz oberhalb des Blaskopfes 1 ist eine Kalibriereinrichtung 2 angeordnet, die in näheren Einzelheiten auch aus der Aufsicht gemäß Darstellung in Figur 6 ersichtlich ist. Die Kalibriereinrichtung 2 dient dazu, den Folienschlauch 4 in seinem Durchmesser um die Mittelachse M festzulegen, wozu sie von außen in radialer Richtung auf den Umfang der Folienblase 4 einwirkt. Zu diesem Zweck umfaßt die Kalibriereinrichtung 2 einen die Folienblase 4 umfangsseitig umgebenden Kalibrierkorb 20, an dessen Innenseite in Richtung auf die durch die Kalibriereinrichtung 2 hindurch tretende Folienblase 4 eine Vielzahl von Tragarmen 21 angeordnet sind. Diese Tragarme 21 tragen an ihrem freien, dem Außenumfang der Folienblase 4 benachbarten Ende jeweils Folienführungselemente 5, deren Zahl und Anordnung in der Figur 1 nur schematisch dargestellt sind, deren reale Anordnung rings um den Umfang der Folienblase 4 in gleichmäßigen Abständen jedoch aus der weiteren Darstellung gemäß Figur 6 entnehmbar ist.

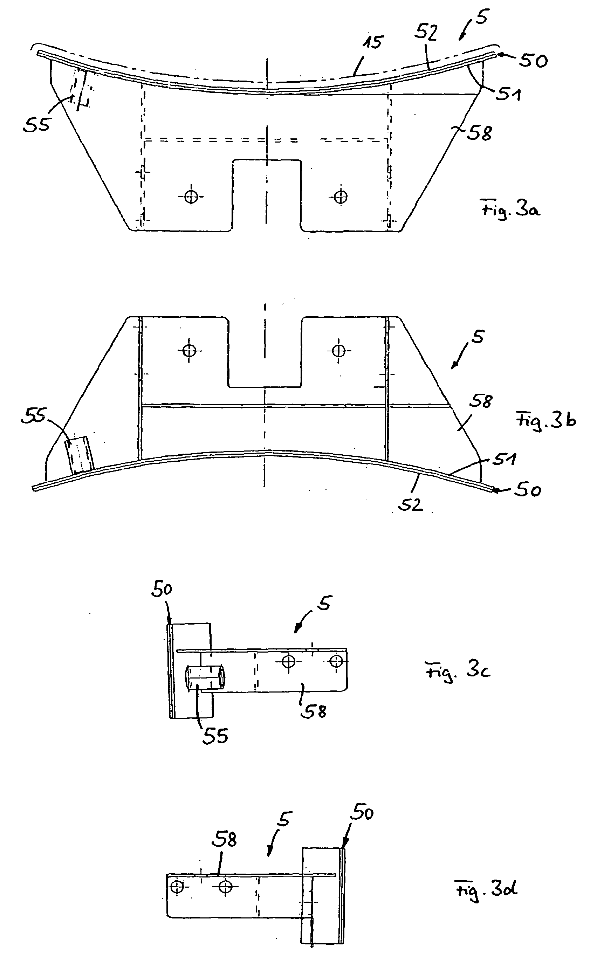

Ein einzelnes am der Folienblase 4 benachbarten Ende eines jeden Tragarmes 21 befestigtes Folienführungselement 5 ist in verschiedenen Ansichten in den Figuren 3a bis 3d dargestellt.

Dieses Folienführungselement 5 umfaßt in seinen wesentlichen Bauteilen ein Gehäuse 50, welches eine Rückwand 51 und eine Vorderwand 52 umfaßt. Die Rückwand 51 ist hierbei in der in der Figur 6 ersichtlichen Einbaulage des Folienführungselementes der Folienblase 4 abgewandt, während die Vorderseite 52 des Gehäuses 50 der Folienblase 4 zugewandt ist.

Das Folienführungselement 5 umfaßt ferner einen mit der Rückwand 51 des Gehäuses 50 verbundenen Befestigungsflansch 58, mit welchem das Folienführungselement 5 am Tragarm 21 innerhalb der Kalibriereinrichtung 2 befestigt wird.

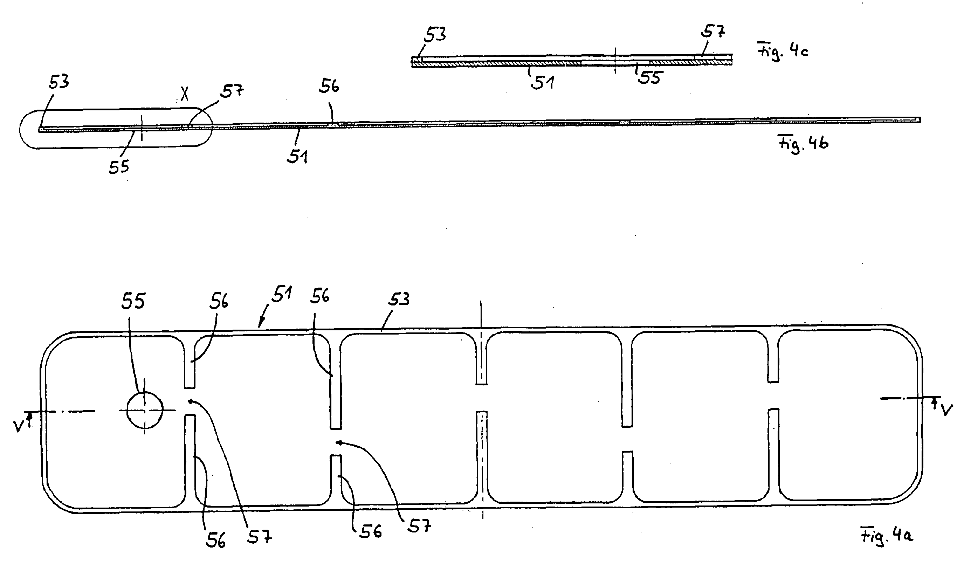

Der grundsätzliche Aufbau der Rückwand 51 und Vorderwand 52 des Folienführungselementes 5 ist in weiteren Einzelheiten auch aus den vergrößerten Darstellungen gemäß Figuren 4a bis 4c sowie 5a bis 5b ersichtlich.

Die in den Figuren 4a bis 4c in geradliniger Erstreckung dargestellte Rückwand 51 des Folienführungselementes ist beispielsweise aus einem luftundurchlässigen metallischen Werkstoff hergestellt und weist entlang ihrer der Vorderwand 52 zugewandten Oberfläche eine umlaufende Umfangswandung 53 auf, die ebenfalls luftdicht ausgeführt ist und beispielsweise auf die Rückwand 51 aufgeschweißt ist. Bevorzugt ist sie durch Ausfräsungen oder dergleichen unter Belassung der Rückwand 51 hergestellt, d.h. integral mit dieser ausgeformt.

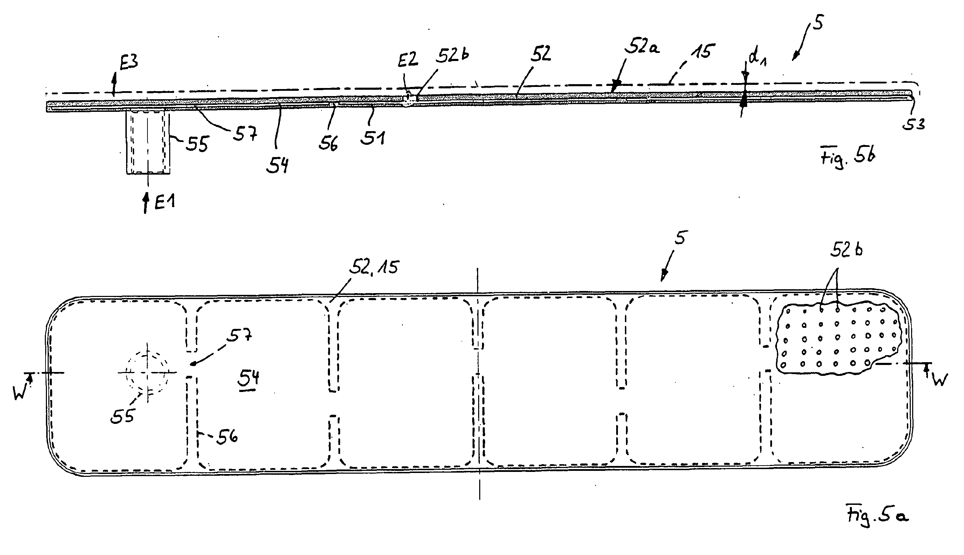

Wie auch aus den Darstellungen gemäß Figur 5a und 5b ersichtlich, wird zur Ausbildung des Folienführungselementes 5 sodann auf die Rückwand 51 mit der hierauf aufgebrachten Umfangswandung 53 die Vorderwand 52 aufgesetzt, wobei diese Vorderwand 52 über die Umfangswandung 53 mit der Rückwand 51 beabstandet und luftdicht verbunden, z.B. laserverschweißt ist, so daß zwischen der Rückwand 51 und der Vorderwand 52 und begrenzt durch die Umfangswandung 53 eine allseits geschlossene Luftkammer 54 innerhalb des solchermaßen ausgebildeten Gehäuses aus Rückwand 51, Umfangswandung 53 und Vorderwand 52 ausgebildet ist.

Diese Luftkammer 54 ist darüber hinaus mittels weiterer auf der Rückwand 51 ausgebildeter Zwischenstege 56, zwischen denen Durchbrechungen 57 ausgebildet sind, in etwa gleich große und über die Durchbrechungen 57 miteinander kommunizierende Teilluftkammern unterteilt, die sich über den gesamten Innenraum der Luftkammer 54 gleichmäßig erstrecken. Auch die Zwischenstege 56 sind bevorzugt gemeinsam mit der Umfangswandung 53 durch Ausfräsungen hergestellt, d.h integral mit der Rückwand 51 verbunden.

Im Bereich der Rückwand 51 ist darüber hinaus eine Lufteintrittsöffnung 55 in Gestalt einer Bohrung mit zugeordnetem Anschlußstutzen ausgebildet, über die ein Luftstrom E1 in das Innere der Luftkammer 54 eingeleitet werden kann. Die beim Gebrauch des Folienführungselementes 5 der Folienblase 4 zugewandte Vorderwand 52 desselben ist ihrerseits mit einer Vielzahl von beispielsweise rastermäßig über die gesamte Fläche gleichmäßig verteilten Luftaustrittsöffnungen 52b versehen, von denen eine einzige beispielhaft in der Darstellung gemäß Figur 5b in stark vergrößertem Durchmesser dargestellt ist. In der Figur 5a ist beispielhaft in der ganz rechts gelegenen Teilluftkammer die Anordnung der Luftaustrittsöffnungen 52b rastermäßig verteilt näher angedeutet. Aus diesen Luftaustrittsöffnungen 52b tritt der zuvor gemäß Pfeil E1 über die Lufteintrittsöffnung 55 in die Luftkammer 54 eingeführte Luftstrom in Form von Teilluftströmen jeweils durch eine Luftaustrittsöffnung 52b aus der Luftkammer 54 durch die Vorderwand 52 hindurch wieder aus, wobei die Luftkammer 54 selbst der Luftverteilung auf die einzelnen Luftaustrittsöffnungen 52b dient.

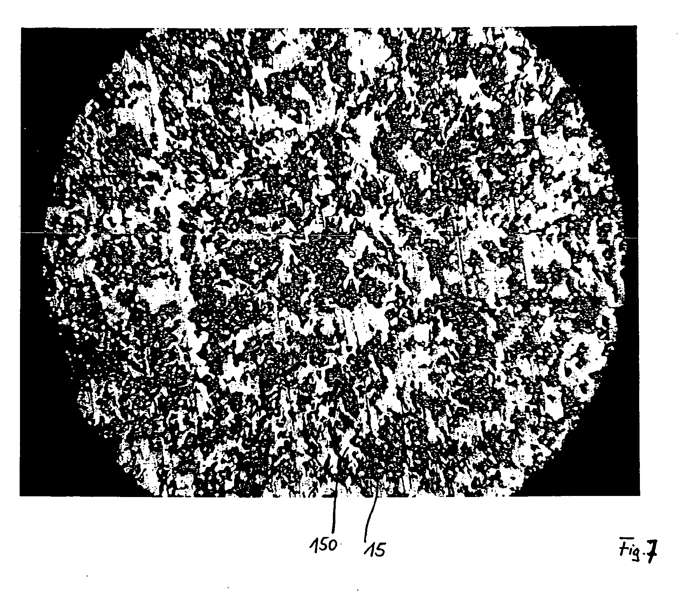

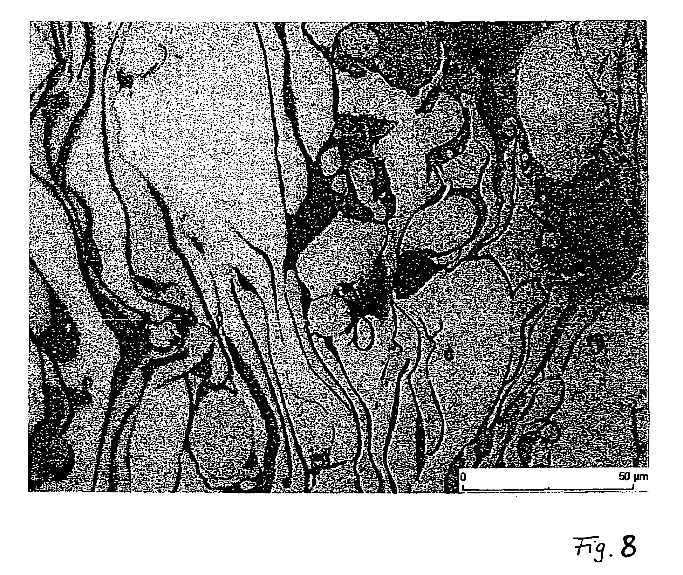

Wesentliches Merkmal des solchermaßen ausgebildeten Folienführungselementes 5 ist es, daß auf die der Folienblase 4 zugewandte Oberfläche 52a der Vorderwand 52 weiterhin eine luftdurchlässige mikroporöse Schicht 15 aufgebracht ist, die in näheren Einzelheiten aus den Mikroskopaufnahmen gemäß Figur 7 und Figur 8 ersichtlich ist. Diese mikroporöse luftdurchlässige Schicht 15 kann beispielsweise auf Basis eines Pulvergemisches mit mehreren Komponenten unterschiedlicher Schmelztemperaturen, z.B. auf Basis von Metall- und Keramikkomponenten hergestellt sein und zeichnet sich durch eine außerordentlich fein verteilte Anordnung von Mikroporen 150 aus, welche einen mittleren Porendurchmesser von etwa 5 bis 100 µm, vorzugsweise 30 bis 100 µm aufweisen. Diese mikroporöse Schicht ist in einer Dicke d1 von 0,5 bis 2,0 mm auf die Vorderwand 52 aufgebracht und bildet die der Oberfläche der Folienblase 4 unmittelbar gegenüberliegende Oberfläche des Folienführungselementes 5 aus.

In der Darstellung gemäß Figur 7 erkennt man neben den dunklen und mit Bezugsziffer 15 gekennzeichneten Bereichen, die luftundurchlässig sind, eng aneinander angrenzende unregelmäßige und hell eingefärbte Mikroporen, die mit Bezugsziffer 150 gekennzeichnet sind. Die Darstellung gemäß Figur 7 wurde durch ein Mikroskop mit 100-facher Vergrößerung erstellt.

Auf dem Schliffbild mittels eines Rasterelektronenmikroskops (REM) in der Figur 8 sind ebenfalls die unregelmäßigen und hier dunkel eingefärbten Poren von etwa 5 bis 100 µm, vorzugsweise 30 bis 100 µm in dem demgegenüber helleren Metallsubstrat der mikroporösen Schicht 15 ersichtlich.

Der über die Lufteintrittsöffnung 55 in der Rückwand 51 in die Luftkammer 54 eintretende Luftstrom gemäß Pfeil E1 tritt somit durch die Luftaustrittsöffnungen 52b in der Vorderwand 52 des Gehäuses 50 in die hierauf aufgebrachte mikroporöse Schicht 15 ein und wird von dort über die einzelnen unregelmäßigen und eng aneinander angrenzenden Mikroporen 150 hindurch an die Außenoberfläche der mikroporösen Schicht 15 geführt, welche zugleich der Folienblase 4 gegenüberliegt. Aus diesen Poren 150 tritt sodann der Luftstrom in Form feinster Mikroluftströme E3 aus, wobei diese Mikroluftströme E3 aufgrund der geringen Porengröße von nur 5 bis 100 µm der Poren 150, vorzugsweise lediglich 30 bis 100 µm, bei deutlich verringerter Geschwindigkeit gegenüber dem eintretenden Luftstrom E1 als laminare Teilluftströme austreten und somit insgesamt an der Oberfläche der mikroporösen Schicht 15 zwischen der Folienblase 4 und den Folienführungselementen 5 ein laminares Luftpolster 22 ausbilden, durch welches die Folienblase 4 berührungslose zwischen den einzelnen Folienführungselementen 5 der Kalibriereinrichtung 2 geführt wird.

Mit anderen Worten dient die außenseitig auf das Gehäuse 50 der Folienführungseinrichtungen 5 aufgebrachte mikroporöse Schicht 15 dazu, den über die Luftaustrittsöffnungen 52b mit hoher Geschwindigkeit herangeführten Luftstrom E2 in eine Vielzahl laminarer kleinster Luftströme E3 aufzuteilen und aus den einzelnen fein verteilten Poren mit einer mittleren Porengröße von 5 bis 100 µm, vorzugsweise 30 bis 100 µm austreten zu lassen, so daß im Ergebnis ein laminares Luftpolster an der der Folienblase 4 zugewandten Oberfläche des Folienführungselementes 5 erzeugt wird.

Der Arbeitsbereich für den zugeführten Luftstrom E1 eines solchen Folienführungselementes 5 liegt abhängig vom gefahrenen Produkt, d.h. der produzierten Schlauchfolienbahn bei etwa 0,5 bis 4 bar. Wenn das Folienführungselement mit einem Luftstrom E1 eines Überdruckes von 0,5 bar beaufschlagt wird, resultiert daraus ein Luftverbrauch von etwa 0,2 l/min dm², d.h. diese Luftmenge tritt in Form kleinster Luftströme E3 aus der mikroporösen Schicht 15 aus. Bei Beaufschlagung mit einem Luftstrom E1 von 4 bar Überdruck beträgt der Luftverbrauch entsprechend etwa 1,6 l/min dm².

Zusammenfassend stellt sich von daher die Herstellung des Folienführungselementes 5 wie folgt dar:

Zunächst werden aus einem z.B. 2mm starken Metallblech die Teilluftkammern der späteren Luftkammer 54 unter Belassung der Umfangswandung 53 und der Zwischenstege 56 etwa 1 mm tief ausgefräst, so daß auch eine durchgehende Rückwand 51 mit einer Dicke von etwa 1 mm verbleibt.

Sodann wird auf dieses solchermaßen hergestellte Gehäuse 50 die ebenfalls z.B. 2mm starke Vorderwand 52 mit den darin bereits ausgebildeten Luftaustrittsöffnungen 52b aufgelegt und umlaufend und luftdicht mit der Umfangswandung 53 verschweißt, z.B. laserverschweißt.

Auch auf den Zwischenstegen 56 wird die aufgelegte Vorderwand 52 mittels Punktschweißungen befestigt, um die Stabilität zu erhöhen.

Nunmehr wird die der Rückwand 51 abgewandte Vorderseite der Vorderwand 52 überschliffen, damit eventuell vorhandene Schweißnähte entfernt werden und dann kann die erwähnte mikroporöse Schicht 15 etwa einer Dicke von 1 mm aufgebracht werden.

Damit eine möglichst präzise und vollflächige Kalibrierung des Umfanges der Folienbahn 4 innerhalb der Kalibriereinrichtung 2 bewirkt wird, sind die einzelnen Folienführungselemente 5 mit einem Gehäuse 50 sowie einer auf die Vorderwand 52 des Gehäuses 50 aufgebrachten mikroporösen Schicht 15 ausgebildet, die abweichend von der Darstellung in den Figuren 4a bis 4c, 5a bis 5b eine dem Umfang der Folienblase 4 angepaßte konkave Krümmung aufweisen, so daß sie sich idealerweise vollständig einhüllend an den Umfang der Folienblase 4 heranführen lassen, wobei jedoch der zur berührungslosen Führung erforderliche Spalt zur Ausbildung des Luftpolsters 22 gewahrt bleibt.

Diese konkav gekrümmte Oberfläche kann aufgrund der lediglich erforderlichen geringen Schichtdicke d1 der mikroporösen Schicht 15 von lediglich 0,5 bis 2 mm unmittelbar durch Aufbringung auf ein bereits die gewünschte Krümmung aufweisendes Gehäuse 50 erzeugt werden. Alternativ und bevorzugt wird aber das bereits mit der mikroporösen Schicht 15 versehene Gehäuse 50 aus seiner geradlinigen, ebenen Erstreckung soweit verformt, bis die gewünschte Krümmung vorliegt. Die mikroporöse Schicht erlaubt eine solche Verformung ohne Verlust ihrer wünschenswerten Porosität. Anschließend erfolgt eine Verbindung des Gehäuses 50 mit dem Befestigungsflansch 58, z.B. durch Verschweißen.

Es versteht sich, daß die Kalibriereinrichtung 2 in an sich bekannter Weise zur Anpassung an die jeweiligen Prozeßbedingungen mit einer Höhenverstellung in Pfeilrichtung H sowie einer Durchmesserverstellung in Pfeilrichtung D ausgerüstet ist. Verschiedene Durchmessereinstellungen sind außerdem aus der Figur 6 ersichtlich.

Gleichfalls versteht es sich, daß alle innerhalb der Kalibriereinrichtung 2 an Tragarmen 21 angeordneten Folienführungselemente 5 über eine gemeinsame Zuleitung 23 mit dem Luftstrom E1 gespeist werden, welcher innerhalb der Kalibriereinrichtung 2 auf die einzelnen Lufteintrittsöffnungen 55 der Folienführungselemente 5 aufgeteilt wird.

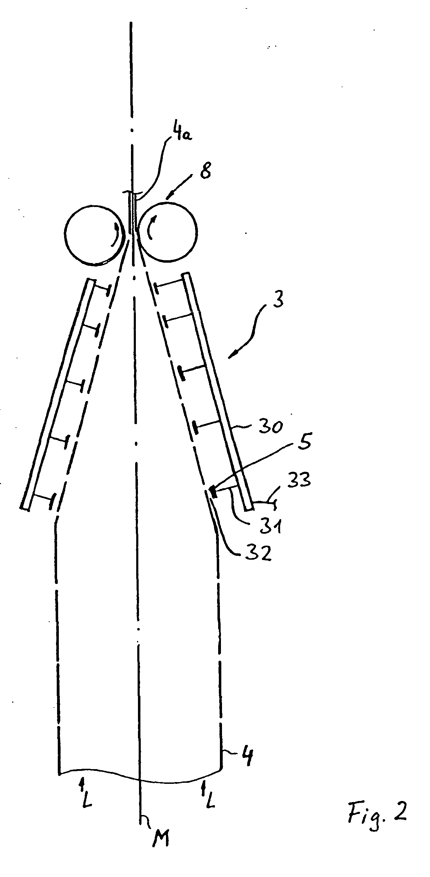

Neben dem vorangehend beschriebenen Einsatz der Folienführungselemente 5 zur berührungslosen Kalibrierung der Folienblase 4 innerhalb einer Kalibriereinrichtung 2 ist es auch möglich, die Folienführungselemente 5 zur berührungslosen Flachlegung der zuvor kalibrierten Folienblase 4 innerhalb einer solchen Vorrichtung zu verwenden, was in näheren Einzelheiten aus der Figur 2 ersichtlich ist.

In an sich bekannter Weise schließt sich in Austritts- und Förderrichtung L der Folienblase 4 an die Kalibriereinrichtung 2 nachfolgend eine Flachlegeeinrichtung 3 an, in welcher die zuvor auf ihren Außendurchmesser kalibrierte und allmählich erstarrte Folienblase 4 vor ihrem Durchtritt durch ein Abquetschwalzenpaar 8 flachgelegt wird, so daß sie nachfolgend als flachgelegte Doppelfolienbahn 4a einer nicht dargestellten Wickeleinrichtung zugeführt werden kann. Auch im Rahmen einer solchen Flachlegeeinrichtung ist eine möglichst berührungslose Führung und Flachlegung der Folienblase 4 wünschenswert.

Zu diesem Zweck weist die Flachlegeeinrichtung zwei im entsprechenden Winkel an gegenüberliegenden Seiten der Folienblase 4 angeordnete Flachlegerahmen 30 auf, an welchen wiederum Tragarme 31 befestigt sind, die an ihrem freien, der Folienblase 4 zugewandten Ende jeweils Folienführungselemente 5 der bereits beschriebenen Art aufweisen. Die im Rahmen einer Flachlegeeinrichtung 3 eingesetzten Folienführungselemente 5 weisen hierbei die ebene Erstreckung gemäß Darstellung in den Figuren 4a bis 4c, 5a, 5b auf und erstrecken sich über die gesamte flachzulegende Breite der Doppelfolienbahn 4a. Bezüglich des weiteren Aufbaus kann auf die obigen Ausführungen verwiesen werden.

Jedes Folienführungselement 5 weist wiederum eine Lufteintrittsöffnung 55 für den Luftstrom E1 auf, der gemeinsam über eine Zuleitung 33 an die Flachlegeeinrichtung 3 herangeführt wird.

In beiden Ausführungsformen bei der Kalibriereinrichtung 2 und/oder der Flachlegeeinrichtung 3 wird durch den Aufbau der Folienführungselemente 5 mit einer auf der der Folienblase 4 zugewandten Seite aufgebrachten luftdurchlässigen mikroporösen Schicht 15, aus der laminare Teilluftströme E3 austreten und ein laminares Luftpolster 22 bzw. 32 für die berührungslose Führung der Folienblase 4 erzeugen, eine vollständig berührungslose Kalibrierung bzw. Flachlegung der Folienblase 4 ermöglicht.

Derartige Kalibriereinrichtungen 2 und Flachlegungen 3 können von daher zur Führung, Kalibrierung bzw. Flachlegung auch stark klebender Folienblasen 4, z.B. bei der Herstellung von EVA-Verbundfolien, PIB-Verbundfolien und Verbunden mit lonomeren in PE-LLD-Folien verwendet werden, ohne daß es zu einem Anhaften an den Folienführungselementen 5 kommt.

Beispielsweise können somit z.B. Oberflächenschutzfolien aus koextrudierten EVA-Verbunden mit hohem VA-Anteil, Streckfolien aus koextrudierten LLDPE-Verbunden mit PIB oder Metallocene-Verbunde und High-Quality-Folien absolut kratzerfrei und mit sehr hohen optischen Anforderungen produziert werden.

Da die erfindungsgemäß eingesetzte mikroporöse Schicht 15 bevorzugt auf Basis von Metall- und Keramikkomponenten hergestellt und auf dem Gehäuse 50 im Bereich der Vorderseite 42 desselben aufgebracht wird, kann sie mit bekannten Verfahren auf einfache Weise auf dem zuvor gefertigten Gehäuse 50 im Bereich der Vorderwand 52 abgelagert werden und nachfolgend z.B. durch Schleifen in die gewünschte Form gebracht werden.

Die im Rahmen der Erfindung vorgeschlagenen Folienführungselemente zeichnen sich neben ihrer mikroporösen Schicht zur Erzeugung des laminaren Luftpolsters insbesondere durch ihre Kompaktheit aus, die beispielsweise bereits bei einer Gesamtdicke von höchstens 5mm einschließlich der mikroporösen Schicht die Ausbildung eines gleichmäßigen Luftpolsters für Kalibrier- oder Flachlegungsanwendungen in der Folienextrusion ermöglichen.

## Patentansprüche

1. Vorrichtung zur Herstellung einer Folie aus thermoplastischem Kunststoff, die mindestens einen Extruder mit einem Blaskopf (1) für den Austritt einer Folienblase (4) aus dem Kunststoff, eine außenseitig auf die Folienblase einwirkende Kalibriereinrichtung (2) sowie eine der Kalibriereinrichtung (2) nachgeordnete Flachlegeeinrichtung (3) für die Folienblase (4) umfaßt, wobei die Kalibriereinrichtung (2) und/oder die Flachlegeeinrichtung (3) Folienführungselemente (5) aufweisen, die mit einem Luftstrom beaufschlagbar sind und im Bereich der der Folienblase zugewandten Oberfläche der Folienführungselemente Luftaustrittsöffnungen für den Austritt des zugeführten Luftstromes vorgesehen sind, wobei die der Folienblase (4) zugewandte Oberfläche der Folienführungselemente (5) von einer luftdurchlässigen mikroporösen Schicht mit einer mittleren Porengröße von 5 bis 100 µm ausgebildet ist, **dadurch gekennzeichnet, daß** eine Vielzahl von Tragarmen (21) vorgesehen sind, die an ihrem freien, dem Außenumfang der Folienblase benachbarten Ende jeweils ein Folienführungselement (5) tragen und jedes Folienführungselement (5) mit einer Lufteintrittsöffnung (55) ausgebildet ist.

2. Vorrichtung nach Anspruch 1, **dadurch gekennzeichnet, daß** die mikroporöse Schicht der Folienführungselemente eine Dicke (d1) von 0,5 bis 2,0 mm aufweist.

3. Vorrichtung nach einem der Ansprüche 1 oder 2, **dadurch gekennzeichnet, daß** die Folienführungselemente (5) bei Beaufschlagung mit einem Luftstrom von 0,5 bis 4 bar einen Luftdurchsatz von 0,2 l/min dm² bei 0,5 bar bis 1,6 l/min dm² bei 4 bar aufweisen.

4. Vorrichtung nach einem der Ansprüche 1 bis 3, **dadurch gekennzeichnet, daß** die mikroporöse Schicht (15) der Folienführungselemente (5) auf Basis eines Pulvergemisches mit mehreren Komponenten unterschiedlicher Schmelztemperaturen hergestellt ist.

5. Vorrichtung nach einem der Ansprüche 1 bis 4, **dadurch gekennzeichnet, daß** die mikroporöse Schicht (15) der Folienführungselemente (5) auf Basis von Metall- und Keramikkomponenten hergestellt ist.

6. Vorrichtung nach einem der Ansprüche 1 bis 5, **dadurch gekennzeichnet, daß** die Folienführungselemente (5) ein Gehäuse (50) aufweisen, welches eine der Folienblase (4) abgewandte Rückwand (51), eine der Folienblase zugewandte und mit Luftaustrittsöffnungen (52b) ausgebildete Vorderwand (52) sowie die Rückwand (51) und die Vorderwand (52) unter Ausbildung einer abgeschlossenen Luftkammer (54) verbindende Umfangswandung (53) aufweist, wobei die Rückwand (51) und die Umfangswandung (53) luftdicht ausgebildet sind und auf die die Luftaustrittsöffnungen (52b) aufweisende Vorderwand (52) die luftdurchlässige mikroporöse Schicht (15) aufgebracht ist und im Bereich der Rückwand (51) oder der Umfangswandung (53) eine Lufteintrittsöffnung (55) in die Luftkammer (54) des Gehäuses (50) vorgesehen ist.

7. Vorrichtung nach Anspruch 6, **dadurch gekennzeichnet, daß** die Luftkammer (54) mittels Zwischenstegen (56) in miteinander kommunizierende Teilkammern unterteilt ist.

8. Vorrichtung nach Anspruch 6 oder 7, **dadurch gekennzeichnet, daß** die Umfangswandung (53) und/oder die Zwischenstege (56) integral mit der Rückwand (51) verbunden sind.

9. Vorrichtung nach einem der Ansprüche 6 bis 8, **dadurch gekennzeichnet, daß** die Vorderwand (52) luftdicht mit der Umfangswandung (53) und ggf. den Zwischenstegen (56) verschweißt ist.

10. Vorrichtung nach einem der Ansprüche 1 bis 9, **dadurch gekennzeichnet, daß** die Folienführungselemente (5) der Kalibriereinrichtung (2) eine mikroporöse Schicht (15) mit einer dem Umfang der Folienblase (4) angepaßten Krümmung aufweisen.

11. Vorrichtung nach einem der Ansprüche 1 bis 10, **dadurch gekennzeichnet, daß** die Folienführungselemente (5) der Kalibriereinrichtung (2) mit einer Durchmesserverstellung ausgerüstet sind.

## Claims

1. A device for producing a film made of a thermoplastic material, having at least one extruder with a blow head (1) for an emergence of a film bubble (4) from the plastic material, a calibrating device (2) acting on an exterior of the film bubble and a flattening device (3) for the film bubble (4) arranged downstream of the calibrating device (2), at least one of the calibrating device (2) and the flattening device (3) having film guidance elements (5) chargeable with an airflow, wherein air outlet openings for an exit of the supplied air flow are provided in an area of the surface of the film guidance elements facing the film bubble and the surface of each of the film guidance elements (5) facing the film bubble (4) is formed by an air-permeable microporous layer of a mean pore size of 5 to 100 µm, **characterized in that** a plurality of support arms (21) is provided, each supporting at a free end thereof adjoining the outer circumference of the film bubble a film guidance element (5) and each film guidance element (5) having an air inlet opening (55).

2. The device in accordance with claim 1, **characterized in that** the microporous layer of the film guidance elements has a thickness (d1) of 0.5 to 2.0 mm.

3. The device in accordance with claim 1 or 2, **characterized in that** when charged with an air flow of 0.5 to 4 bar, the film guidance elements (5) have an air flow corresponding to 0.2 l/min dm² at 0.5 bar, and up to 1.6 l/min dm² at 4 bar.

4. The device in accordance with any of the claims 1 to 3, **characterized in that** the microporous layer (15) of the film guidance elements (5) is of a powder mixture of several components with differing melting temperatures.

5. The device in accordance with any of the claims 1 to 4, **characterized in that** the microporous layer (15) of the film guidance elements (5) is of metal and ceramic components.

6. The device in accordance with any of the claims 1 to 5, **characterized in that** the film guidance elements (5) have a housing (50) having a rear wall (51) facing away from the film bubble (4), a front wall (52) facing the film bubble (4) and having air outlet openings (52b) and a circumferential wall (53) connecting the rear wall (51) and the front wall (52) while forming a closed air chamber (54), wherein the rear wall (51) and the front wall (52) are air-tight, the air-permeable microporous layer (15) is applied to the front wall (52) having the air outlet openings (52b), and an air inlet opening (55) to the air chamber (54) of the housing (50) is near one of the rear wall (51) and the circumferential wall (53).

7. The device in accordance with claim 6, **characterized in that** with intermediate strips (56) the air chamber (54) is divided into partial chambers communicating with each other.

8. The device in accordance with claim 6 or 7, **characterized in that** at least one of the circumferential wall (53) and the intermediate strips (56) are integrally connected with the rear wall (51).

9. The device in accordance with any of the claims 6 to 8, **characterized in that** the front wall (52) is welded together in an air-tight manner with at least one of the circumferential wall (53) and the intermediate strips (56).

10. The device in accordance with any of the claims 1 to 9, **characterized in that** the film guidance elements (5) of the calibrating arrangement (2) have a microporous layer (15) with a curvature matched to the circumference of the film bubble (4).

11. The device in accordance with any of the claims 1 to 10, **characterized in that** the film guidance elements (5) of the calibrating arrangement (2) are provided with a diameter adjustment.

## Revendications

1. Dispositif pour fabriquer une feuille en synthétique thermoplastique, qui comprend au moins une extrudeuse avec une tête de soufflage (1) pour la sortie d'une bulle (4) en synthétique, un dispositif de calibrage (2) agissant côté extérieur sur la bulle ainsi qu'un dispositif de mise à plat pour la bulle (4), agencé après le dispositif de calibrage (2), dans lequel le dispositif de calibrage (2) et/ou le dispositif de mise à plat (3) présente(nt) des éléments de guidage de feuille (5), qui peuvent être alimentés par un courant d'air et il est prévu, dans la zone de la surface, tournée vers la bulle, des éléments de guidage de feuille, des ouvertures de sortie d'air pour évacuer le courant d'air acheminé, la surface, tournée vers la bulle (4), des éléments de guidage de feuille (5) se présentant sous la forme d'une couche microporeuse perméable à l'air ayant une taille moyenne de pores de 5 à 100 µm, **caractérisé en ce qu'**on prévoit une pluralité de bras porteurs (21) qui portent, à leur extrémité libre, adjacente à la périphérie externe de la bulle, respectivement un élément de guidage de feuille (5) et **en ce que** chaque élément de guidage de feuille (5) est conçu avec une ouverture de sortie d'air (55).

2. Dispositif selon la revendication 1, **caractérisé en ce que** la couche microporeuse des éléments de guidage de feuille présente une épaisseur (d1) de 0,5 à 2,0 mm.

3. Dispositif selon l'une quelconque des revendications 1 ou 2, **caractérisé en ce que** les éléments de guidage de feuille (5) présentent, pour une alimentation par un courant d'air de 0,5 à 4 bars, un débit d'air de 0,2 l/mn dm² (0,5 bar) à 1,6 l/mn dm² (4 bars).

4. Dispositif selon l'une quelconque des revendications 1 à 3, **caractérisé en ce que** la couche microporeuse (15) des éléments de guidage de feuille (5) est fabriquée à base d'un mélange pulvérulent de plusieurs composants à des températures de fusion différentes.

5. Dispositif selon l'une quelconque des revendications 1 à 4, **caractérisé en ce que** la couche microporeuse (15) des éléments de guidage de feuille (5) est fabriquée à base de composants de métal et de céramique.

6. Dispositif selon l'une quelconque des revendications 1 à 5, **caractérisé en ce que** les éléments de guidage de feuille (5) présentent un boîtier (50), ayant une paroi arrière (51) opposée à la bulle (4), une paroi avant (52) tournée vers la bulle et pourvue d'ouvertures de sortie d'air (52b), ainsi qu'une paroi périphérique (53) raccordant la paroi arrière (51) et la paroi avant (52) en formant une chambre d'air fermée (54), dans lequel la paroi arrière (51) et la paroi périphérique (53) sont formées de manière étanche à l'air, on applique la couche microporeuse perméable à l'air (15) sur la paroi avant présentant les ouvertures de sortie d'air (52b) et on prévoit, dans la zone de la paroi arrière (51) ou de la paroi périphérique (53), une ouverture de sortie d'air (55) dans la chambre d'air (54) du boîtier (50).

7. Dispositif selon la revendication 6, **caractérisé en ce que** la chambre d'air (54) est subdivisée par des traverses intermédiaires (56) en chambres partielles communiquant l'une avec l'autre.

8. Dispositif selon la revendication 6 ou 7, **caractérisé en ce que** l'on raccorde la paroi périphérique (53) et/ou les traverses intermédiaires (56) d'une seule pièce avec la paroi arrière (51).

9. Dispositif selon l'une quelconque des revendications 6 à 8, **caractérisé en ce que** la paroi avant (52) est soudée de manière étanche à l'air avec la paroi périphérique (53) et éventuellement avec les traverses intermédiaires (56).

10. Dispositif selon l'une quelconque des revendications 1 à 9, **caractérisé en ce que** les éléments de guidage de feuille (5) du dispositif de calibrage (2) présentent une couche microporeuse (15) ayant une courbure adaptée à la périphérie de la bulle (4).

11. Dispositif selon l'une quelconque des revendications 1 à 10, **caractérisé en ce que** les éléments de guidage de feuille (5) du dispositif de calibrage (2) sont pourvus d'un réglage de diamètre.
